# EUROPÄISCHE PATENTSCHRIFT

(11) **EP 2 509 827 B1**
(45) Veröffentlichungstag und Bekanntmachung des Hinweises auf die Patenterteilung: **10.05.2017**
(21) Anmeldenummer: 10784975.4
(22) Anmeldetag: 13.11.2010
(51) Int. Cl.: B60R 21/01, H04M 11/04

(54) **FAHRZEUG, INSBESONDERE KRAFTFAHRZEUG, UMFASSEND EINEN STEUERGERÄTE-VERBUND**
VEHICLE COMPRISING A CONTROL UNIT ASSEMBLY
VÉHICULE AUTOMOBILE COMPRENANT UN ENSEMBLE DE DISPOSITIFS DE COMMANDE

(30) Priorität: 12.12.2009 DE 102009058096
(43) Veröffentlichungstag der Anmeldung: 17.10.2012
(73) Patentinhaber: Bayerische Motoren Werke Aktiengesellschaft, 80809 München (DE)
(72) Erfinder: KAINDL, Markus, 85579 Neubiberg (DE); GRUFFKE, Michael, 85435 Erding (DE)
(86) Internationale Anmeldenummer: PCT/EP2010/006925
(87) Internationale Veröffentlichungsnummer: WO 2011/069592

(56) Entgegenhaltungen:
- EP-A1- 1 826 734
- DE-A1- 4 318 441
- US-A- 5 555 286
- US-A1- 2004 142 678

## Beschreibung

Die Erfindung betrifft ein Fahrzeug, insbesondere ein Kraftfahrzeug, mit einem Steuergeräte-Verbund umfassend ein Notruf-Steuergerät und ein Fahrzeug mit einem Steuergeräte-Verbund.

Zum Schutz der Insassen eines Fahrzeugs sind aus dem Stand der Technik viele unterschiedliche Mechanismen bekannt. Zum Beispiel weisen im Wesentlichen alle modernen Fahrzeuge einen Insassenschutz in der Form von Airbags auf, welche bei der Detektion eines Aufpralls im Fahrzeug ausgelöst werden und die Insassen vor dem Aufprall schützen. Die im Fahrzeug integrierten Sicherheitsmechanismen werden dabei durch Steuergeräte gesteuert, welche zum Auslösen der entsprechenden Sicherheitsfunktionalitäten an einen Datenbus im Fahrzeug gekoppelt sind. Hier und im Folgenden werden solche Steuergeräte, welche Funktionen zum Insassenschutz steuern und die Sicherheitsfunktionen in Abhängigkeit von bestimmten Kriterien auslösen, als Sicherheits-Steuergeräte bezeichnet. Ein solches Fahrzeug ist aus der US 2004/0142678 gemäß Oberbegriff des Anspruchs 1 bekannt. Um im Falle eines Unfalls schnell Hilfe bereit zu stellen, ist es aus dem Stand der Technik ferner bekannt, eine Notruf-Funktion in einem Fahrzeug zu integrieren. Hierzu kann ein separates, an dem Datenbus des Fahrzeugs angeschlossenes Steuergerät verwendet werden, welches über den Datenbus mit Sicherheits-Steuergeräten kommuniziert. Wird dabei von einem oder mehreren Sicherheits-Steuergeräten ein entsprechendes Auslösesignal ausgegeben, welches von dem Notruf-Steuergerät über den Datenbus empfangen wird, führt dies dazu, dass das Notruf-Steuergerät eine Kommunikation mit einer externen Stelle aufbaut, um die externe Stelle über den Unfall zu informieren. Das Notruf-Steuergerät umfasst hierzu ein entsprechendes Kommunikationsmodul, um die externe Stelle zu kontaktieren. Dabei wird insbesondere eine Sprachverbindung zwischen einem menschlichen Operator in der externen Stelle und dem Fahrer des verunfallten Fahrzeugs aufgebaut, so dass der Operator überprüfen kann, ob bzw. wie stark der Fahrer im Fahrzeug verletzt ist und welche Hilfe zum Unfallort geschickt werden soll. Dadurch, dass das Notruf-Steuergerät ein reguläres, an dem Fahrzeug-Datenbus angeschlossenes Gerät darstellt, muss es eine Vielzahl von Anforderungen des Fahrzeugherstellers erfüllen. Dies führt zu einem erheblichen Mehraufwand bei der Herstellung und Entwicklung solcher Notruf-Steuergeräte. Ferner müssen unterschiedliche Ausführungen von Notruf-Steuergeräten für verschiedene Fahrzeug- bzw. Bordnetz-Varianten entwickelt werden.

Aufgabe der Erfindung ist es deshalb, ein Notruf-Steuergerät für ein Fahrzeug zu schaffen, mit dem einfach und kostengünstig eine Notruf-Funktionalität in einem Fahrzeug implementiert werden kann.

Diese Aufgabe wird durch das Fahrzeug gemäß Anspruch 1 gelöst. Weiterbildungen der Erfindung sind in den abhängigen Ansprüchen definiert.

Das erfindungsgemäße Fahrzeug umfasst ein Steuergeräte-Verbund, umfassend einen Notruf-Steuergerät mit einem Kommunikationsmodul, welches bei Betrieb des Notruf-Steuergeräts im Fahrzeug eine Kommunikationsverbindung zu einer externen Stelle außerhalb des Fahrzeugs als Reaktion auf den Empfang von einem oder mehreren Auslösesignalen zumindest eines Sicherheits-Steuergeräts des Fahrzeugs aufbaut. Das Notruf-Steuergerät zeichnet sich dabei dadurch aus, dass es zumindest eine Punkt-zu-Punkt-Schnittstelle zur Kommunikation mit dem zumindest einen Sicherheits-Steuergerät aufweist, wobei über die zumindest eine Punkt-zu-Punkt-Schnittstelle das oder die Auslösesignale des zumindest einen Sicherheits-Steuergeräts bei Betrieb des Notruf-Steuergeräts im Fahrzeug (d.h. wenn das zumindest eine Sicherheits-Steuergerät über die zumindest eine Punkt-zu-Punkt-Schnittstelle an das Notruf-Steuergerät gekoppelt ist) empfangen werden. Unter einer Punkt-zu-Punkt-Schnittstelle ist erfindungsgemäß eine Kommunikationsschnittstelle zu verstehen, welche eindeutig zwei Kommunikationsendpunkten zuordenbar ist, wobei ein Endpunkt das Notruf-Steuergerät darstellt und der andere Endpunkt im Betrieb des Notruf-Steuergeräts durch ein Sicherheits-Steuergerät gebildet wird. Die Punkt-zu-Punkt-Schnittstelle unterscheidet sich somit von Schnittstellen hin zu einem Fahrzeug-Datenbus, auf dem Daten von einer Vielzahl von unterschiedlichen Geräten übertragen werden, ohne dass eine explizite Zuordnung zwischen zwei Kommunikationsendpunkten besteht. Dem Notruf-Steuergerät kann lediglich ein einzelnes Sicherheits-Steuergerät zuordenbar sein, welches dann über eine einzelne Punkt-zu-Punkt-Schnittstelle mit dem Notruf-Steuergerät gekoppelt wird. Gegebenenfalls ist es auch möglich, dass einem Notruf-Steuergerät mehrere Sicherheits-Steuergeräte zuordenbar sind. In diesem Fall ist jedes Sicherheits-Steuergerät über eine Punkt-zu-Punkt-Schnittstelle mit dem Notruf-Steuergerät koppelbar.

Das Notruf-Steuergerät kann einfach und kostengünstig realisiert werden, da die Kommunikation mit entsprechenden Sicherheits-Steuergeräten nicht über den Fahrzeug-Datenbus erfolgt, sondern hierfür eine einfach zu implementierende Punkt-zu-Punkt-Schnittstelle verwendet wird. Ferner wird die Anzahl an verschiedenen Varianten von Notruf-Steuergeräten reduziert, da die Notruf-Steuergeräte nicht an unterschiedliche Datenbus-Systeme bzw. Fahrzeug- und Bordnetz-Architekturen angepasst werden müssen.

Das Notruf-Steuergerät stellt ein eigenständiges Bauteil in dem Fahrzeug dar, welches über die zumindest eine Punkt-zu-Punkt-Schnittstelle mit zumindest einem Sicherheits-Steuergerät des Fahrzeugs verbindbar ist. In einer besonders bevorzugten Variante ist das Notruf-Steuergerät auch in einem separaten, sich von dem zumindest einen Sicherheits-Steuergerät unterscheidenden Gehäuse untergebracht. Hierdurch wird es ermöglicht, das Notruf-Steuergerät unabhängig von dem entsprechenden Sicherheits-Steuergerät im Fahrzeug zu verbauen. Insbesondere kann für das Notruf-Steuergerät ein Bauraum im Fahrzeug gewählt werden, welcher eine gute Kommunikationsverbindung über das Kommunikationsmodul mit der externen Stelle gewährleistet.
In einer bevorzugten Variante ist die zumindest eine Punkt-zu-Punkt-Schnittstelle des Notruf-Steuergeräts eine serielle Schnittstelle. Die Punkt-zu-Punkt-Schnittstelle ist ferner vorzugsweise eine drahtgebundene Schnittstelle. Gegebenenfalls besteht jedoch auch die Möglichkeit, die Schnittstelle kontaktlos zu realisieren.

In einer besonders bevorzugten Ausführungsform des Notruf-Steuergeräts ist die zumindest eine Punkt-zu-Punkt-Schnittstelle die einzige Schnittstelle zur Kommunikation mit dem zumindest einen Sicherheits-Steuergerät bzw. sind die Punkt-zu-Punkt-Schnittstellen (bei mehreren solcher Schnittstellen) die einzigen Schnittstellen zur Kommunikation mit dem zumindest einen Sicherheits-Steuergerät. In dieser Variante wird auf weitere Kommunikationsschnittstellen hin zu Steuergeräten im Fahrzeug verzichtet, wodurch eine besonders einfache Ausführung eines Notruf-Steuergeräts realisiert wird.

In einer weiteren Variante des Verfahrens umfasst das Kommunikationsmodul des Notruf-Steuergeräts ein Mobilfunkmodul zum Aufbau einer Kommunikationsverbindung über ein Mobilfunknetz.

Vorzugsweise dient das Notruf-Steuergerät zur Anbindung an ein Airbag-Steuergerät. In einer bevorzugten Variante ist das Notruf-Steuergerät deshalb derart ausgestaltet, dass es Auslösesignale eines Airbag-Steuergeräts verarbeiten kann.

In einer weiteren, besonders bevorzugten Ausführungsform umfasst das Notruf-Steuergerät ein GPS-Modul (GPS = Global Positioning System) zur Positionsbestimmung, wobei das Kommunikationsmodul des Notruf-Steuergeräts im Rahmen der Kommunikationsverbindung zu der externen Stelle außerhalb des Fahrzeugs die vom GPS-Modul bestimmte Position übermittelt. Hierdurch wird die Notruf-Funktionalität verbessert, da an die externe Stelle auch automatisch die Fahrzeugposition übermittelt wird, so dass auch unabhängig von einer Sprachkommunikation mit dem Fahrer Hilfe an den Unfallort geschickt werden kann.

In einer weiteren, bevorzugten Variante des Notruf Steuergeräts können über die zumindest eine Punkt-zu-Punkt-Schnittstelle ferner Verwaltungsfunktionen durch das zumindest eine Sicherheits-Steuergerät auf dem Notruf-Steuergerät ausgeführt werden. Solche Verwaltungsfunktionen umfassen insbesondere die Aktualisierung von Software des Notruf-Steuergeräts, die Codierung von Daten für das Notruf-Steuergerät, das Beschreiben bzw. Auslesen des Fehlerspeichers des Notruf-Steuergeräts und dergleichen.
Neben dem oben beschriebenen Notruf-Steuergerät umfasst die Erfindung ferner einen Steuergeräte-Verbund für ein Fahrzeug, insbesondere ein Kraftfahrzeug, wobei dieser Verbund zumindest ein Sicherheits-Steuergerät und das NotrufSteuergerät umfasst. Dabei ist das zumindest eine Sicherheits-Steuergerät über die zu-mindest eine Punkt-zu-Punkt-Schnittstelle an das Notruf-Steuergerät gekoppelt.

Die Erfindung betrifft ein Fahrzeug, insbesondere ein Kraftfahrzeug, welches den oben beschriebenen Steuergeräte-Verbund umfasst. Vorzugsweise ist dabei das zumindest eine Sicherheits-Steuergerät an einem anderen Ort im Fahrzeug als das Notruf-Steuergerät verbaut. Insbesondere ist das zumindest eine Sicherheits-Steuergerät in einem Bauraum im Fahrzeug verbaut, der Crash-gesichert ist, so dass das Steuergerät im Falle eines Unfalls bzw. Aufpralls seine Funktionalität unbeeinträchtigt ausführen kann und insbesondere die entsprechenden Schutzfunktionen, wie z.B. das Auslösen von Airbags, aktivieren kann. Demgegenüber wird das Notruf-Steuergerät in dem Fahrzeug vorzugsweise in einem Bauraum verbaut, der frei von Abschirmung ist, so dass ein guter Empfang für das Kommunikations-Modul bzw. das gegebenenfalls verbaute GPS-Modul gewährleistet ist.

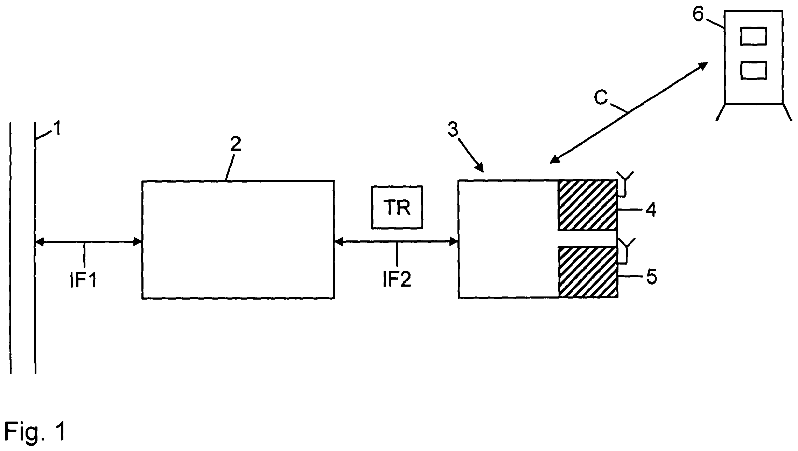

Ein Ausführungsbeispiel der Erfindung wird nachfolgend anhand der beigefügten Fig. 1 detailliert beschrieben. Diese Figur zeigt in schematischer Darstellung ein in einem Fahrzeug verbautes Sicherheits-Steuergerät in Kombination mit einer Ausführungsform eines Notruf-Steuergeräts.
In Fig. 1 ist ein Sicherheits-Steuergerät 2 in der Form eines Airbag-Steuergeräts wiedergegeben, welches über eine Schnittstelle IF1 an den Fahrzeug-Datenbus 1 eines Kraftfahrzeugs, z.B. an den CAN-Bus (CAN = Controller Area Network), gekoppelt ist. Wird über das Airbag-Steuergerät basierend auf den Signalen von im Fahrzeug verbauten Sensoren (z.B. Beschleunigungssensoren) ein Unfall bzw. Aufprall detektiert, wird von dem Airbag-Steuergerät 2 neben Signalen zum Aktivieren von Airbags ein Auslösesignal TR zum Aktivieren einer Notruf-Funktion ausgegeben. Im Stand der Technik wird dieses Auslösesignal über die Schnittstelle IF1 auf den Fahrzeug-Bus 1 gegeben, um dann von einem an den Bus gekoppelten Notruf-Steuergerät zum Aktivieren des Notrufs empfangen zu werden. Im Unterschied hierzu wird in der erfindungsgemäßen Ausführungsform der Fig. 1 das Auslösesignal TR über eine Punkt-zu-Punkt-Schnittstelle IF2 an ein Notruf-Steuergerät 3 mit eingeschränkter Funktionalität gegeben, welches im Folgenden auch als Steuergeräte-Satellit bezeichnet wird. Der Steuergeräte-Satellit 3 weist keine Anbindung an den Fahrzeug-Bus 1 auf und beinhaltet neben der Schnittstelle IF2 ein Kommunikationsmodul 4 mit entsprechender Teilnehmeridentifikation über SIM- oder USIM-Karten zum Aufbau einer Kommunikationsverbindung über ein Mobilfunknetz sowie ein GPS-Modul 5 zur Bestimmung des Fahrzeugstandorts. Dadurch, dass das Notruf-Steuergerät 3 keine Anbindung an den Fahrzeug-Bus 1 aufweist, muss es auch nicht auf die spezielle Variante des verwendeten Fahrzeug-Busses abgestimmt sein. Es kann somit unabhängig vom Fahrzeug in Kombination mit dem entsprechenden Sicherheits-Steuergerät 2 zur Implementierung einer Notruf-Funktion eingesetzt werden.

Empfängt das Notruf-Steuergerät 3 nunmehr ein entsprechendes Auslösesignal TR über die Punkt-zu-Punkt-Schnittstelle IF2, baut es selbsttätig mittels des Kommunikationsmoduls 4 eine Kommunikationsverbindung C über ein Mobilfunknetz zu einer externen Stelle 6 auf, welche die Dienststelle eines Telematik-Systems darstellt und häufig auch als Backend bezeichnet wird. Über diese Kommunikationsverbindung werden dann die mittels des GPS-Moduls 5 bestimmten Positionsdaten an das Backend übermittelt. Ferner wird eine Sprachverbindung zwischen einem menschlichen Operator im Backend 6 und dem Fahrzeug aufgebaut, damit der Operator überprüfen kann, ob der Fahrer im Fahrzeug ansprechbar ist bzw. wie schwer dieser unter Umständen verletzt ist. Der Operator hat dann die Möglichkeit, dritte Stellen, insbesondere eine Polizeidienststelle, über den Unfall und die Position des Unfalls basierend auf den GPS-Daten zu informieren, so dass Hilfe an den Unfallort geschickt wird.

Das Notruf-Steuergerät 3 stellt in der Ausführungsform der Fig. 1 ein separates, vom Airbag-Steuergerät 2 getrenntes Bauteil in einem eigenen Gehäuse dar. Hierdurch wird es ermöglicht, dass das Notruf-Steuergerät an einem anderen Ort im Fahrzeug als das Airbag-Steuergerät verbaut wird. In einer besonders bevorzugten Variante wird das Notruf-Steuergerät 3 an einem Ort im Fahrzeug verbaut, der frei von Abschirmungen ist, so dass ein guter Empfang sowohl für das Kommunikationsmodul 4 als auch für das GPS-Modul 5 gewährleistet ist. Demgegenüber wird das Airbag-Steuergerät in einem Bauraum im Fahrzeug verbaut, der unfallgeschützt ist, so dass das Airbag-Steuergerät während eines Unfalls nicht beschädigt wird und somit die entsprechenden Schutzfunktionen durch das Steuergerät sicher ausgeführt werden können.

In einer besonders bevorzugten Ausführungsform übernimmt das Airbag-Steuergerät auch Funktionalitäten zur Verwaltung des Steuergeräte-Satelliten 3, wobei diese Funktionalitäten auch über die Punkt-zu-Punkt-Schnittstelle IF2 bereitgestellt werden. Insbesondere können durch das Steuergerät 2 sog. Housekeeping-Funktionalitäten, wie Software-Aktualisierungen, Codierungen, das Beschreiben und Auslesen von Fehlerspeichern, auf dem Steuergeräte-Satelliten 3 realisiert werden. Das Sicherheits-Steuergerät 2 stellt somit einen Housekeeping-Proxy dar, dessen Funktionalitäten dem Steuergeräte-Satelliten 3 über die Punkt-zu-Punkt-Schnittstelle IF2 bereitgestellt werden.

Die Verwendung eines Steuergeräte-Satelliten zur Implementierung der Notruf-Funktion eines Sicherheits-Steuergeräts weist eine Reihe von Vorteilen auf. Insbesondere müssen nur im Sicherheits-Steuergerät verschiedene Fahrzeug- bzw. Bordnetz-Varianten abgebildet werden. Darüber hinausgehende Ausführungen, welche lediglich die Notruf-Funktion betreffen, werden separat in dem Steuergeräte-Satelliten abgebildet und müssen nicht im Sicherheits-Steuergerät implementiert werden. Dadurch reduziert sich die Anzahl der Gesamtvarianten von Sicherheits-Steuergeräten. Die verschiedenen Varianten von Steuergeräte-Satelliten ergeben sich insbesondere aus unterschiedlichen Mobilfunkstandards (wie z.B. GSM, UMTS und dergleichen), unterschiedlichen Frequenzbandkonfigurationen (z.B. 900 MHz, 1800 MHz etc.) sowie gegebenenfalls unterschiedlichen regionalen Mobilfunkbetreibern.

## Patentansprüche

1. Fahrzeug, insbesondere Kraftfahrzeug, umfassend einen Steuergeräte-Verbund,
wobei der Steuergeräte-Verbund zumindest ein Sicherheits-Steuergerät (2) und ein Notruf-Steuergerät (3) für das Fahrzeug umfasst,
wobei das zumindest eine Sicherheits-Steuergerät (2) über die zumindest eine Punkt-zu-Punkt-Schnittstelle (IF2) an das Notruf-Steuergerät (3) gekoppelt ist,
wobei das Notruf-Steuergerät ein Kommunikationsmodul (4) umfasst, welches bei Betrieb des Notruf-Steuergeräts (3) im Fahrzeug eine Kommunikationsverbindung (C) zu einer externen Stelle (6) außerhalb des Fahrzeugs als Reaktion auf den Empfang von einem oder mehreren Auslösesignalen (TR) zumindest eines Sicherheits-Steuergeräts (2) des Fahrzeugs aufbaut,
wobei das Notruf-Steuergerät (3) zumindest eine Punkt-zu-Punkt-Schnittstelle (IF2) zur Kommunikation mit dem zumindest einen Sicherheits-Steuergerät (2) aufweist,
wobei über die zumindest eine Punkt-zu-Punkt-Schnittstelle (IF2) das oder die Auslösesignale (TR) des zumindest einen Sicherheits-Steuergeräts (2) empfangbar sind,
**dadurch gekennzeichnet,**
**dass** das zumindest eine Sicherheits-Steuergerät (2) an einem anderen Ort im Fahrzeug als das Notruf-Steuergerät (3) verbaut ist, und
**dass** über die zumindest eine Punkt-zu-Punkt-Schnittstelle (IF2) ferner Verwaltungsfunktionen durch das zumindest eine Sicherheits-Steuergerät (2) auf dem Notruf-Steuergerät (3) ausgeführt werden können.

2. Fahrzeug nach Anspruch 1, **dadurch gekennzeichnet, dass** das Notruf-Steuergerät (3) in einem separaten, sich von dem zumindest einen Sicherheits-Steuergerät (2) unterscheidenden Gehäuse untergebracht ist.

3. Fahrzeug nach Anspruch 1 oder 2, **dadurch gekennzeichnet, dass** die zumindest eine Punkt-zu-Punkt-Schnittstelle (IF2) eine serielle Schnittsstelle ist.

4. Fahrzeug nach einem der vorhergehenden Ansprüche, **dadurch gekennzeichnet, dass** die zumindest eine Punkt-zu-Punkt-Schnittstelle (IF2) eine drahtgebundene oder drahtlose Schnittsstelle ist.

5. Fahrzeug nach einem der vorhergehenden Ansprüche, gekennzeichnet, dass die zumindest eine Punkt-zu-Punkt-Schnittstelle (IF2) die einzige Schnittstelle bzw. die einzigen Schnittstellen zur Kommunikation mit dem zumindest einen Sicherheits-Steuergerät (2) ist bzw. sind.

6. Fahrzeug nach einem der vorhergehenden Ansprüche, **dadurch gekennzeichnet, dass** das Kommunikationsmodul (4) ein Mobilfunkmodul zum Aufbau einer Kommunikationsverbindung (C) über ein Mobilfunknetz umfasst.

7. Fahrzeug nach einem der vorhergehenden Ansprüche, **dadurch gekennzeichnet, dass** das Notruf-Steuergerät (3) das oder die Auslösesignale eines Sicherheits-Steuergeräts (2) in der Form eines Airbag-Steuergeräts verarbeiten kann.

8. Fahrzeug nach einem der vorhergehenden Ansprüche, **dadurch gekennzeichnet, dass** das Notruf-Steuergerät (3) ein GPS-Modul (5) zur Positionsbestimmung umfasst, wobei das Kommunikationsmodul (4) des Notruf-Steuergeräts (3) im Rahmen der Kommunikationsverbindung (C) zu der externen Stelle (5) außerhalb des Fahrzeugs die vom GPS-Modul (5) bestimmte Position übermittelt.

## Claims

1. A vehicle, more especially a motor vehicle, comprising a control device assembly,
wherein the control device assembly comprises at least one safety control device (2) and an emergency call control device (3) for the vehicle,
wherein the at least one safety control device (2) is coupled to the emergency call control device (3) via the at least one point-to-point interface (IF2),
wherein the emergency call control device comprises a communication module (4) which, during operation of the emergency call control device (3), establishes in the vehicle a communication connection (C) to an external location (6) outside the vehicle in response to receiving one or more trigger signals (TR) from at least one safety control device (2) of the vehicle,
wherein the emergency call control device (3) has at least one point-to-point interface (IF2) for communication with the at least one safety control device (2),
wherein the trigger signal or trigger signals (TR) from the at least one safety control device (2) can be received via the at least one point-to-point interface (IF2),
**characterised in that** the at least one safety control device (2) is installed in a different place in the vehicle compared to the emergency call control device (3), and
**in that** furthermore administrative functions can be performed on the emergency call control device (3) by the at least one safety control device (2) via the at least one point-to-point interface (IF2).

2. A vehicle according to claim 1, **characterised in that** the emergency call control device (3) is accommodated in a separate housing which differs from the at least one safety control device (2).

3. A vehicle according to claim 1 or claim 2, **characterised in that** the at least one point-to-point interface (IF2) is a serial interface.

4. A vehicle according to any of the preceding claims, **characterised in that** the at least one point-to-point interface (IF2) is a wired or wireless interface.

5. A vehicle according to any of the preceding claims, **characterised in that** the at least one point-to-point interface (IF2) is or are the only interface or the only interfaces for communication with the at least one safety control device (2).

6. A vehicle according to any of the preceding claims, **characterised in that** the communication module (4) comprises a mobile radio module for establishing a communication connection (C) via a mobile network.

7. A vehicle according to any of the preceding claims, **characterised in that** the emergency call control device (3) can process the trigger signal or trigger signals from a safety control device (2) in the form of an airbag control device.

8. A vehicle according to any of the preceding claims, **characterised in that** the emergency call control device (3) comprises a GPS module (5) for position determination, the communication module (4) of the emergency call control device (3) transmitting the position, determined by the GPS module (5), within the scope of the communication connection (C) to the external location (5) outside the vehicle.

## Revendications

1. Véhicule, en particulier véhicule automobile comprenant un ensemble d'appareils de commande, dans lequel
- l'ensemble d'appareils de commande comprend au moins un appareil de commande de sécurité (2) et un appareil de commande d'appel d'urgence (3) pour le véhicule,
- l'appareil de commande de sécurité (2) est couplé à l'appareil de commande d'appel d'urgence (3) par au moins une interface point par point (IF2),
- l'appareil de commande d'appel d'urgence comprend un module de communication (4) qui établit, lors du fonctionnement de cet appareil de commande d'appel d'urgence (3) dans le véhicule, une liaison de communication (C) avec un lieu externe (6) situé à l'extérieur du véhicule en réaction à la réception d'au moins un signal de déclenchement (TR) de l'appareil de commande de sécurité (2) du véhicule,
- l'appareil de commande d'appel d'urgence (3) comporte au moins une interface point par point (IF2) pour permettre la communication avec l'appareil de commande de sécurité (2),
- le signal de déclenchement (TR) de l'appareil de commande de sécurité (2) pouvant être reçus par l'intermédiaire de l'interface point par point (IF2),
**caractérisé en ce que**
- l'appareil de commande de sécurité (2) est situé dans un emplacement du véhicule différent de celui ou est situé l'appareil de commande d'appel d'urgence (3), et
- par l'intermédiaire de l'interface point par point (IF2), des fonctions de gestion sur l'appareil de commande d'appel d'urgence (3) par l'intermédiaire de l'appareil de commande de sécurité (2).

2. Véhicule conforme à la revendication 1,
**caractérisé en ce que**
l'appareil de commande d'appel d'urgence (3) est logé dans un boîtier séparé différent de l'appareil de commande de sécurité (2).

3. Véhicule conforme à la revendication 1 ou 2,
**caractérisé en ce que**
l'interface point par point (IF2) est une interface série.

4. Véhicule conforme à l'une des revendications précédentes,
**caractérisé en ce que**
l'interface point par point (IF2) est une interface filaire ou sans fil.

5. Véhicule conforme à l'une des revendications précédentes,
**caractérisé en ce que**
l'interface point par point (IF2) est la seule interface permettant une mise en communication avec l'appareil de commande de sécurité (2).

6. Véhicule conforme à l'une des revendications précédentes,
**caractérisé en ce que**
le module de communication (4) est un module radiophonique mobile pour permettre d'établir une liaison de communication (C) par l'intermédiaire d'un réseau téléphonique mobile.

7. Véhicule conforme à l'une des revendications précédentes,
**caractérisé en ce que**
l'appareil de commande d'appel d'urgence (3) peut activer le signal de déclenchement d'un l'appareil de commande de sécurité (2) constitué par un appareil de commande d'airbag.

8. Véhicule conforme à l'une des revendications précédentes,
**caractérisé en ce que**
l'appareil de commande d'appel d'urgence (3) comporte un module GPS (5) pour permettre une détermination de position, le module de communication (4) de l'appareil de commande d'appel d'urgence (3) transmettant la position déterminée par le module GPS (5) au lieu externe (6) situé à l'extérieur du véhicule dans le cadre de la liaison de communication (C).
